(19)

Europäisches Patentamt

European Patent Office

Office européen des brevets

(11) **EP 4 786 168 A1**

(12) **EUROPEAN PATENT APPLICATION**
published in accordance with Art. 153(4) EPC

(43) Date of publication:
**05.08.2026 Bulletin 2026/32**

(21) Application number: **24871333.1**

(22) Date of filing: **15.04.2024**

(51) International Patent Classification (IPC):
**B32B 27/00** (2006.01)    **B32B 7/022** (2019.01)
**B32B 7/023** (2019.01)    **C09J 7/38** (2018.01)
**C09J 201/00** (2006.01)    **F21S 2/00** (2016.01)
**G02B 1/10** (2015.01)

(52) Cooperative Patent Classification (CPC):
**B32B 7/022; B32B 7/023; B32B 27/00; C09J 7/38;
C09J 201/00; F21S 2/00; G02B 1/10**

(86) International application number:
**PCT/JP2024/014909**

(87) International publication number:
**WO 2025/069519 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.09.2023 JP 2023169246**

(71) Applicant: **Nitto Denko Corporation
Ibaraki-shi, Osaka 567-8680 (JP)**

(72) Inventors:
• **KOMOTO, Yusuke
  Ibaraki-shi, Osaka 567-8680 (JP)**
• **SHIBUYA, Akihiro
  Ibaraki-shi, Osaka 567-8680 (JP)**

(74) Representative: **Hoffmann Eitle
Patent- und Rechtsanwälte PartmbB
Arabellastraße 30
81925 München (DE)**

(54) **LAMINATE**

(57)    Provided is a laminate having excellent adhesiveness to an object to be bonded under a high-humidity environment. The laminate according to an embodiment of the present invention includes: a resin substrate; a low-refractive index layer; and a pressure-sensitive adhesive layer. The low-refractive index layer is arranged on one side of the resin substrate. The low-refractive index layer has a refractive index of 1.30 or less. The pressure-sensitive adhesive layer is arranged on a side of the resin substrate opposite to the low-refractive index layer. The laminate satisfies the following expression (1): 2,000 [Pa/$\mu$m]$\leq$G'/t$\leq$15,000 [Pa/$\mu$m]$\cdots$(1) where G' represents a shear storage elastic modulus of the pressure-sensitive adhesive layer at 60°C and "t" represents a thickness of the pressure-sensitive adhesive layer.

FIG. 1

**EP 4 786 168 A1**

**Description**

Technical Field

The present invention relates to a laminate.

Background Art

It has been known that the propagation of light in a light guide plate for propagating light is optionally controlled by bonding a laminate including a low-refractive index layer having a refractive index lower than that of the light guide plate to the light guide plate. As such laminate, there has been proposed, for example, a laminate including: a substrate; and a variable refractive index extraction layer arranged on the substrate, wherein the variable refractive index extraction layer includes a first region where a first substance having a relatively low refractive index is selectively printed, and a second region formed by overcoating the first substance with a second substance having a relatively high refractive index (see, for example, Patent Literature 1). The laminate described in Patent Literature 1 is bonded to a light guide plate via a pressure-sensitive adhesive layer, the pressure-sensitive adhesive layer being formed on the surface of the substrate opposite to the variable refractive index extraction layer.

Citation List

Patent Literature

[PTL 1] WO 2014/031726 A1

Summary of Invention

Technical Problem

In recent years, the applications of an optical product including a light guide plate have been diversified, and the optical product may be exposed to a high-humidity environment. In this case, when the laminate described in Patent Literature 1 is applied to an optical product that may be exposed to a high-humidity environment, the laminate may peel from the light guide plate.
The present invention has been made to solve the above-mentioned problem of the related art, and a primary object of the present invention is to provide a laminate having excellent adhesiveness to an object to be bonded under a high-humidity environment.

Solution to Problem

[1] According to an embodiment of the present invention, there is provided a laminate, including: a resin substrate; a low-refractive index layer; and a pressure-sensitive adhesive layer. The low-refractive index layer is arranged on one side of the resin substrate. The low-refractive index layer has a refractive index of 1.30 or less. The pressure-sensitive adhesive layer is arranged on a side of the resin substrate opposite to the low-refractive index layer. The laminate satisfies the following expression (1):

$$2{,}000 \text{ [Pa/}\mu\text{m]} \leq G'/t \leq 15{,}000 \text{ [Pa/}\mu\text{m]} \cdots (1)$$

where $G'$ represents a shear storage elastic modulus of the pressure-sensitive adhesive layer at 60°C and "t" represents a thickness of the pressure-sensitive adhesive layer.

[2] In the laminate according to the above-mentioned item [1], the thickness "t" of the pressure-sensitive adhesive layer may be more than 5 $\mu$m and less than 50 $\mu$m.

[3] In the laminate according to the above-mentioned item [1] or [2], the shear storage elastic modulus $G'$ of the pressure-sensitive adhesive layer at 60°C may be 80,000 Pa or more.

Advantageous Effects of Invention

According to the embodiment of the present invention, the laminate having excellent adhesiveness to an object to be bonded under a high-humidity environment can be provided.

Brief Description of Drawings

FIG. **1** is a schematic sectional view of a laminate according to one embodiment of the present invention.

FIG. **2** is a schematic sectional view of an optical product including the laminate of FIG. **1.**

Description of Embodiments

Embodiments of the present invention are described below. However, the present invention is not limited to these embodiments. The drawings are schematically or conceptually depicted for ease of viewing and understanding, and a length, a width, a shape, a size, a ratio, a direction, a number, and the like may differ from the actual ones, and there may be no correspondence between the drawings.

A. Overall Configuration of Laminate

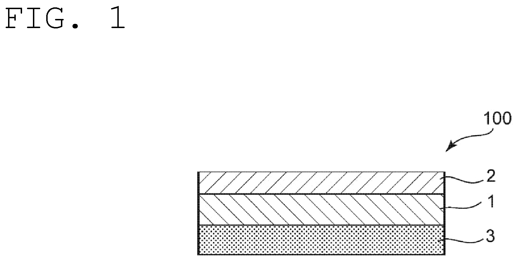

FIG. **1** is a schematic sectional view of a laminate according to one embodiment of the present invention.
A laminate **100** of the illustrated example includes: a resin substrate **1**; a low-refractive index layer **2**; and a pressure-sensitive adhesive layer **3**. The low-refractive index layer **2** is arranged on one side of the resin substrate **1**. The refractive index of the low-refractive index layer **2** is 1.30 or less. The pressure-sensitive adhesive layer **3** is arranged on the side of the resin substrate **1** opposite to the low-refractive index layer **2**. The laminate **100** satisfies the following expression (1):

$$2,000 \ [\text{Pa}/\mu\text{m}] \leq G'/t \leq 15,000 \ [\text{Pa}/\mu\text{m}] \cdot \cdot (1)$$

where G' represents a shear storage elastic modulus of the pressure-sensitive adhesive layer **3** at 60°C and "t" represents a thickness of the pressure-sensitive adhesive layer **3**.
According to such configuration, the laminate satisfies the expression (1), and hence adhesiveness to an object to be bonded under a high-humidity environment (typically, 80%RH (relative humidity) or more) can be improved. Accordingly, even when the laminate including the low-refractive index layer is exposed to a high-temperature environment in a state of being bonded to the object to be bonded via the pressure-sensitive adhesive layer, peeling of the laminate from the object to be bonded can be suppressed, and waviness resulting from the pressure-sensitive adhesive layer (hereinafter referred to as "waviness of the adhesive") can also be suppressed from occurring in the laminate. That is, the moisture resistance of the laminate can be significantly improved.
The ratio (hereinafter referred to as "G'/t") of the shear storage elastic modulus G' of the pressure-sensitive adhesive layer **3** at 60°C with respect to the thickness "t" of the pressure-sensitive adhesive layer **3** is preferably 2,500 Pa/$\mu$m or more, more preferably 3,000 Pa/$\mu$m or more, still more preferably 5,000 Pa/$\mu$m or more. Meanwhile, the ratio G'/t is, for example, 14,000 Pa/$\mu$m or less, preferably 13,000 Pa/$\mu$m or less, more preferably 12,000 Pa/$\mu$m or less, still more preferably 8,000 Pa/$\mu$m or less.
When the ratio G'/t falls within such ranges, the moisture resistance of the laminate can be stably improved.
The thickness "t" of the pressure-sensitive adhesive layer **3** is, for example, more than 5 $\mu$m, preferably 8 $\mu$m or more, more preferably 10 $\mu$m or more, still more preferably 12 $\mu$m or more. Meanwhile, the thickness "t" of the pressure-sensitive adhesive layer **3** is, for example, less than 50 $\mu$m, preferably 45 $\mu$m or less, more preferably 30 $\mu$m or less, still more preferably 23 $\mu$m or less.
When the thickness of the pressure-sensitive adhesive layer falls within such ranges, the laminate can stably satisfy the expression (1).
The shear storage elastic modulus G' of the pressure-sensitive adhesive layer **3** at 60°C is, for example, 70,000 Pa or more, preferably 80,000 Pa or more, more preferably 85,000 Pa or more, still more preferably 95,000 Pa or more. Meanwhile, the shear storage elastic modulus G' of the pressure-sensitive adhesive layer at 60°C is, for example, 130,000 Pa or less, preferably 120,000 Pa or less. The shear storage elastic modulus G' of the pressure-sensitive adhesive layer at 60°C is determined by, for example, reading a value at 60°C at the time of measurement in conformity with a method described in JIS K 7244-1 "Plastics-Determination of dynamic mechanical properties" under the condition of a frequency of 1 Hz in the range of from -50°C to 150°C at a rate of temperature increase of 5°C/min.

When the shear storage elastic modulus of the pressure-sensitive adhesive layer falls within such ranges, the laminate can more stably satisfy the expression (1).

The shear storage elastic modulus G' of the pressure-sensitive adhesive layer **3** at 23°C is, for example, from 90,000 Pa to 200,000 Pa, preferably from 100,000 Pa to 190,000 Pa. The shear storage elastic modulus G' of the pressure-sensitive adhesive layer at 23°C is determined by, for example, reading a value at 23°C at the time of measurement in conformity with a method described in JIS K 7244-1 "Plastics-Determination of dynamic mechanical properties" under the condition of a frequency of 1 Hz in the range of from -50°C to 150°C at a rate of temperature increase of 5°C/min.

The resin substrate, the low-refractive index layer, and the pressure-sensitive adhesive layer are specifically described below.

B. Resin Substrate

The resin substrate **1** can typically transmit light. The total light transmittance of the resin substrate **1** is, for example, from 70% to 100%, preferably from 80% to 99%. When the total light transmittance of the resin substrate falls within such ranges, the laminate as a whole can achieve excellent transparency. Accordingly, adverse effects in the applications of the laminate can be suppressed. The total light transmittance is measured with, for example, any appropriate haze meter.

Any appropriate configuration may be adopted for the resin substrate **1**. A material for the resin substrate **1** is, for example, a thermoplastic resin material or a curable resin material, preferably a thermoplastic resin material.

Examples of the thermoplastic resin material include: (meth)acrylic resins such as polymethyl methacrylate (PMMA); cycloolefin (COP)-based resins; polyester-based resins such as polyethylene terephthalate (PET); polyvinyl acetal resins; polycarbonate resins; polyarylate resins; and polyurethane resins. The term "(meth)acrylic" refers to acrylic and/or methacrylic. The materials for the resin substrate **1** may be used alone or in combination thereof. Of such materials for the resin substrate **1,** (meth)acrylic resins are preferred.

The thickness of the resin substrate **1** is, for example, from 10 μm to 80 μm, preferably from 20 μm to 40 μm.

C. Low-refractive Index Layer

Typically, the low-refractive index layer **2** is directly arranged on a surface of the resin substrate **1.**

The refractive index of the low-refractive index layer **2** is 1.30 or less as described above, and the lower limit thereof is more than 1.00. The refractive index of the low-refractive index layer **2** is preferably from 1.13 to 1.28, more preferably from 1.14 to 1.27, still more preferably from 1.15 to 1.26, particularly preferably from 1.16 to 1.25. The refractive index refers to a refractive index measured at a wavelength of 550 nm unless otherwise stated. The refractive index is, for example, a value measured by a method described in Examples to be described later.

The total light transmittance of the low-refractive index layer **2** is, for example, from 85% to 99%, preferably from 87% to 98%, more preferably from 89% to 97%. When the total light transmittance of the low-refractive index layer falls within such ranges, the laminate as a whole can achieve excellent transparency.

The haze of the low-refractive index layer **2** is, for example, less than 5%, preferably less than 3%. Meanwhile, the haze is, for example, 0.1% or more, or for example, 0.2% or more. When the haze of the low-refractive index layer falls within such ranges, the laminate as a whole can achieve excellent transparency. For example, the haze may be calculated from the following equation by using a value measured with a haze meter (e.g., "HM-150" manufactured by Murakami Color Research Laboratory Co., Ltd.).

Haze (%)=[diffuse transmittance (%)/total light transmittance (%)]×100 (%)

The thickness of the low-refractive index layer **2** is, for example, from 0.3 μm to 10 μm, preferably from 0.5 μm to 5.0 μm, more preferably from 0.8 μm to 1.2 μm. When the thickness of the low-refractive index layer falls within such ranges, the laminate having excellent moisture resistance can be reduced in thickness.

Any appropriate configuration may be adopted for the low-refractive index layer **2** as long as the layer can achieve the above-mentioned desired characteristics. The low-refractive index layer **2** may have any appropriate pattern shape depending on the applications of the laminate **100.**

Materials described in, for example, WO 2004/113966 A1, JP 2013-254183 A, and JP 2012-189802 A may each be adopted as a material for forming the low-refractive index layer **2.** A typical example of the material for forming the low-refractive index layer is a silicon compound. Examples of the silicon compound include: silica-based compounds; hydrolyzable silanes, and partial hydrolysates and dehydration condensates thereof; silanol group-containing silicon compounds; and active silica obtained by bringing a silicate into contact with an acid or an ion-exchange resin. The examples of the material for forming the low-refractive index layer also include: organic polymers; polymerizable monomers (e.g., a (meth)acrylic monomer and a styrene-based monomer); and curable resins (e.g., a (meth)acrylic resin, a fluorine-containing resin, and a urethane resin). Those materials may be used alone or in combination thereof.

In one embodiment, the low-refractive index layer **2** may include spaces, such as pores and gaps, therein. In this case, the porosity of the low-refractive index layer **2** is, for example, from 20 vol% to 60 vol%, preferably from 25 vol% to 55 vol%, more preferably from 30 vol% to 50 vol%, still more preferably from 35 vol% to 45 vol%. With such porosity, the refractive index of the low-refractive index layer can be set to an appropriate range, and the strength of the low-refractive index layer can be ensured. In this case, the porosity is a value calculated from the value of a refractive index measured with, for example, an ellipsometer by using Lorentz-Lorenz's formula.

The size of each of the pores that may be included in the low-refractive index layer **2** may be adjusted to a desired size in accordance with purposes, applications, and the like. The size of each of the pores that may be included in the low-refractive index layer **2** is, for example, 2 nm or more, preferably 5 nm or more, more preferably 10 nm or more, still more preferably 20 nm or more. Meanwhile, the size of each of the pores that may be included in the low-refractive index layer is, for example, 500 nm or less, preferably 200 nm or less, more preferably 100 nm or less. The size of each of the pores refers to a long axis diameter out of the long axis diameter and short axis diameter of the pore.

The sizes of the pores may be quantified by a BET test method. In one embodiment, 0.1 g of a measurement sample (e.g., a formed low-refractive index layer) is loaded into the capillary of a specific surface area-measuring apparatus (e.g., "ASAP 2020" manufactured by Micromeritics Instrument Corporation), and is then dried under reduced pressure at room temperature for 24 hours so that a gas included in the measurement sample may be removed. Then, an adsorption isotherm is drawn by causing the measurement sample to adsorb a nitrogen gas, and the pore size distribution of the sample is determined. Thus, the sizes of the pores may be evaluated.

The low-refractive index layer including the spaces therein is, for example, a low-refractive index layer formed of a porous body and/or a layer including an air layer in at least part thereof. The low-refractive index layer typically contains aerogel and/or particles (which may be, for example, hollow fine particles and/or porous particles). The low-refractive index layer may be preferably a nanoporous layer (specifically a low-refractive index layer in which the diameters of 90% or more of pores fall within the range of from $10^{-1}$ nm to $10^3$ nm).

Any appropriate particles may be adopted as the particles. The particles are each typically formed of a silica-based compound. Examples of the shapes of the particles include a spherical shape, a plate shape, a needle shape, a string shape, and a botryoidal shape. String-shaped particles are, for example, particles in which a plurality of particles each having a spherical shape, a plate shape, or a needle shape are strung together like beads, short fiber-shaped particles (e.g., short fiber-shaped particles described in JP 2001-188104 A), and a combination thereof. The string-shaped particles may be linear or branched. Botryoidal-shaped particles are, for example, particles in which a plurality of spherical, plate-shaped, and needle-shaped particles aggregate to form a botryoidal shape. The shapes of the particles may be identified through, for example, observation with a transmission electron microscope.

An example of the low-refractive index layer **2** is a structural body, which is formed of one or a plurality of kinds of constituent units each forming a fine void structure, and in which the constituent units are bonded to each other (e.g., chemically bonded to each other through a catalytic action). Examples of the shape of each of the constituent units include a particle shape, a fiber shape, a rod shape, and a flat plate shape. The constituent units may have only one shape, or may have two or more shapes in combination.

A specific example of the low-refractive index layer **2** is a low-refractive index layer formed of a porous body in which particles having micropores (hereinafter referred to as "microporous particles") are chemically bonded to each other. Such low-refractive index layer may be obtained by, for example, chemically bonding microporous particles to each other. The shape of each of the microporous particles is not particularly limited, and may be, for example, a spherical shape or any other shape. In addition, the microporous particles may be, for example, sol-gel beaded particles, nanoparticles (e.g., hollow nanosilica/nanoballoon particles), or nanofibers. The microporous particles each typically contain an inorganic substance. Specific examples of the inorganic substance include silicon (Si), magnesium (Mg), aluminum (Al), titanium (Ti), zinc (Zn), and zirconium (Zr). Those inorganic substances may be used alone or in combination thereof. In one embodiment, the microporous particles are, for example, microporous particles of a silicon compound, and the porous body is, for example, a silicone porous body. The microporous particles of the silicon compound each contain, for example, a pulverized product of a gel-like silica compound.

Another example of the low-refractive index layer **2** is a layer, which contains fibrous substances such as nanofibers, and in which spaces are formed by the entanglement of the fibrous substances. Still another example of the low-refractive index layer is a layer formed by using hollow nanoparticles or nanoclay, or a layer formed by using hollow nanoballoons or magnesium fluoride. The low-refractive index layer may be formed of a single constituent substance, or may be formed of a plurality of constituent substances. The low-refractive index layer may be formed in a single form of the above-mentioned examples, or may be formed in a plurality of forms of the above-mentioned examples.

The low-refractive index layer **2** may be, for example, an open-cell structural body in which hole structures are continuous with each other. The open-cell structure means that the hole structures are three-dimensionally continuous with each other in the porous body (e.g., silicone porous body), and can be said to be a state in which the spaces of the hole structures are continuous with each other. When the low-refractive index layer has an open-cell structure, its porosity can be increased. It is difficult to form an open-cell structure through use of closed-cell particles each individually having a hole structure, such as hollow particles (e.g., hollow silica). However, when silica sol particles (pulverized products of a gel-like silicon compound that forms sol) are used, for example, the silica sol particles each may have a three-dimensional dendritic structure, and hence the dendritic particles are sedimented and deposited in a coating film (coating film of the sol containing the pulverized products of the gel-like silicon compound). Accordingly, an open-cell structure can be easily formed. The low-refractive index layer preferably has a monolith structure in which an open-cell structure includes a plurality of pore size distributions. The monolith structure means, for example, a hierarchical structure including a structure in which nanosized fine pores are present and an open-cell structure in which the nanosized fine pores assemble. With the monolith structure, both of film strength and a high porosity can be achieved by, for example, imparting the high porosity to the layer through use of a coarse open-cell structure while imparting the film strength thereto through use of fine pores.

For example, the monolith structure may be formed by controlling the pore size distribution of a void structure to be produced in the gel (gel-like silicon compound) at a stage before its pulverization into the silica sol particles. In addition, the monolith structure may be formed by, for example, controlling the particle size distribution of the silica sol particles after the pulverization to a predetermined size at the time of the pulverization of the gel-like silicon compound. The particle size distribution may be measured with, for example, a particle size distribution-evaluating apparatus based on a dynamic light scattering method, a laser diffraction method, or the like, and an electron microscope, such as a scanning electron microscope (SEM) or a transmission electron microscope (TEM).

As described above, the low-refractive index layer **2** may contain pulverized products of a gel-like compound such as a gel-like silicon compound, and the pulverized products are, for example, chemically bonded to each other (chemical bonding). There is no particular limitation on the chemical bonding, and examples thereof include cross-linking bonding, covalent bonding, and hydrogen bonding. The volume-average particle diameter of the pulverized products in the low-refractive index layer **2** is, for example, 0.10 μm or more, preferably 0.20 μm or more, more preferably 0.40 μm or more. Meanwhile, the volume-average particle diameter of the pulverized products in the low-refractive index layer **2** is, for example, 2.00 μm or less, preferably 1.50 μm or less, more preferably 1.00 μm or less. The volume-average particle diameter is an indicator of the variation in particle size of the pulverized products, and is determined by, for example, particle size distribution measurement.

The low-refractive index layer **2** may contain silicon atoms. For example, the silicon atoms included in the low-refractive index layer **2** preferably form a siloxane bond. The ratio of unbonded silicon atoms (specifically, residual silanol groups) out of all the silicon atoms included in the low-refractive index layer **2** is, for example, less than 50%, preferably 30% or less, more preferably 15% or less.

The low-refractive index layer **2** may be formed by, for example, applying or printing a low-refractive index layer-forming liquid (sometimes also be referred to as "coating liquid") on a surface of the resin substrate **1.** More specifically, the low-refractive index layer **2** may be formed by heating a coating film or a printed layer of the low-refractive index layer-forming liquid formed on the resin substrate **1.**

In one embodiment, the coating film may be formed through use of a coating liquid containing microporous particles, and the microporous particles may be chemically bonded to each other by heating (including drying) the coating liquid. The coating liquid containing microporous particles is, for example, a suspension. For example, a catalyst (cross-linking reaction accelerator) that accelerates the cross-linking bonding between the microporous particles (e.g., a dehydration condensation reaction of residual silanol groups that may be included in the microporous particles) and/or a substance (catalyst generator) that generates a catalyst (cross-linking reaction accelerator) may be added to the coating liquid. Examples of the catalyst include a photoactive catalyst and a thermally active catalyst. Examples of the substance (catalyst generator) that generates a catalyst include a photocatalyst generator and a thermal catalyst generator. Examples of the photocatalyst generator include a photobase generator (catalyst that generates a basic catalyst by irradiation with light) and a photoacid generator (substance that generates an acidic catalyst by irradiation with light). For example, the microporous particles are pulverized products of a gel-like compound (preferably, a gel-like silicon compound), and the low-refractive index layer is a low-refractive index layer formed of a porous body (preferably, a silicone porous body) containing the pulverized products of a gel-like compound. Such microporous particles may have a state in which three-dimensional structures of the gel-like compound before pulverization are dispersed in a three-dimensional basic structure, and a structure based on the three-dimensional basic structure may be formed through use of such microporous particles. Specifically, a new structure different from the three-dimensional structure of the gel-like compound may be formed. Thus, the finally obtained low-refractive index layer (low-refractive index layer) may have a low refractive index equivalent to, for example, that of an air layer. In addition, when the microporous particles are chemically bonded to each other, the three-dimensional basic structure can be fixed, and sufficient strength can be ensured in the finally obtained low-refractive index layer (low-refractive index layer). Details about specific configurations of the low-refractive index layer (low-refractive index layer) and the method of forming the low-refractive index layer (low-refractive index layer) are described in, for example, WO 2019/151073 A1, the description of which is incorporated herein by reference.

The coating thickness of the coating liquid may be set in accordance with a desired thickness for the low-refractive index layer **2.** The heating temperature of the coating film (coating liquid) is, for example, 20°C or more, preferably 50°C or more. Meanwhile, the heating temperature of the coating film (coating liquid) is, for example, 200°C or less, preferably 150°C or less. The heating time of the coating film (coating liquid) is, for example, 10 seconds or more. Meanwhile, the heating time of the coating film (coating liquid) is, for example, 24 hours or less, preferably 1 hour or less, more preferably 30 minutes or less, still more preferably 10 minutes or less.

D. Pressure-sensitive Adhesive Layer

Typically, the pressure-sensitive adhesive layer **3** is directly arranged on the surface of the resin substrate **1** opposite to the low-refractive index layer **2.**

The pressure-sensitive adhesive layer **3,** which is described in detail later, is arranged to bond the laminate **100** to an object to be bonded (typically an optical member). Any appropriate pressure-sensitive adhesive may be used as the pressure-sensitive adhesive for forming the pressure-sensitive adhesive layer **3** as long as the pressure-sensitive adhesive has such characteristics as described above. The pressure-sensitive adhesive is typically, for example, an acrylic pressure-sensitive adhesive (acrylic pressure-sensitive adhesive composition).

The acrylic pressure-sensitive adhesive composition typically contains a (meth)acrylic polymer as a main component. The (meth)acrylic polymer may be incorporated into the pressure-sensitive adhesive composition at a ratio of, for example, 50 wt% or more, preferably 70 wt% or more, more preferably 90 wt% or more in the solid content of the pressure-sensitive adhesive composition. The (meth)acrylic polymer contains a constituent unit derived from an alkyl (meth)acrylate. The (meth)acrylate includes an acrylate and/or a methacrylate.

The content ratio of the constituent unit derived from the alkyl (meth)acrylate in the (meth)acrylic polymer is, for example, 80 wt% or more, preferably 90 wt% or more. The alkyl group of the alkyl (meth)acrylate is, for example, a linear or branched alkyl group having 1 to 18 carbon atoms. The average number of carbon atoms of the alkyl group is preferably from 3 to 9, more preferably from 3 to 6. The alkyl (meth)acrylate is particularly preferably butyl acrylate.

The (meth)acrylic polymer may contain a constituent unit derived from a copolymerizable monomer that is copolymerizable with the alkyl (meth)acrylate in addition to the constituent unit derived from the alkyl (meth)acrylate. When the (meth)acrylic polymer contains a constituent unit derived from a copolymerizable monomer, the shear storage elastic modulus G' of the pressure-sensitive adhesive layer at 60°C can be stably adjusted to the above-mentioned ranges.

Examples of the copolymerizable monomer include a carboxyl group-containing monomer, a hydroxyl group-containing monomer, an amide group-containing monomer, an aromatic ring-containing (meth)acrylate, and a heterocycle-containing vinyl-based monomer. The copolymerizable monomers may be used alone or in combination thereof.

Preferred examples of the copolymerizable monomer include: a carboxyl group-containing monomer such as (meth)acrylic acid; a hydroxyl group-containing monomer such as 4-hydroxybutyl acrylate; and a heterocycle-containing vinyl-based monomer such as N-acryloylmorpholine.

The content ratio of the constituent unit derived from the copolymerizable monomer in the (meth)acrylic polymer is, for example, from 0 wt% to 20 wt%, preferably from 0.5 wt% to 15 wt%, more preferably from 0.8 wt% to 13 wt%, particularly preferably from 5 wt% to 12 wt%.

The acrylic pressure-sensitive adhesive composition preferably contains a silane coupling agent and/or a cross-linking agent. The silane coupling agent is, for example, an epoxy group-containing silane coupling agent. The cross-linking agent is, for example, an isocyanate-based cross-linking agent or a peroxide-based cross-linking agent. Further, the acrylic pressure-sensitive adhesive composition may contain an antioxidant and/or a conductive agent. Details about the pressure-sensitive adhesive layer or the acrylic pressure-sensitive adhesive composition are described in, for example, JP 2006-183022 A, JP 2015-199942 A, JP 2018-053114 A, JP 2016-190996 A, and WO 2018/008712 A1, the descriptions of which are incorporated herein by reference.

E. Usage Form of Laminate

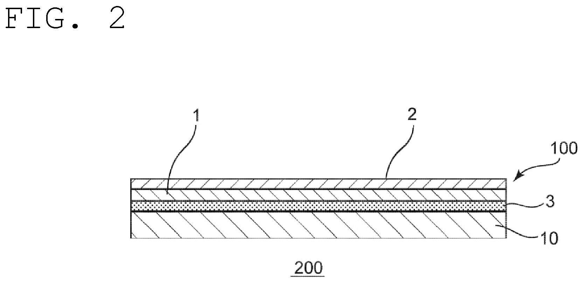

As illustrated in FIG. **2,** the above-mentioned laminate **100** is typically applicable to an optical product **200** including a light guide plate **10.** In one embodiment, the laminate **100** is bonded to the light guide plate **10** serving as an example of an object to be bonded, via the pressure-sensitive adhesive layer **3.**

The light guide plate **10** typically allows light having entered the light guide plate **10** from a light source (typically an LED) (not shown) to propagate in a predetermined direction (horizontal direction in FIG. **2).** In the illustrated example, the laminate **100** is bonded over the entirety of the light guide plate **10.** Thus, light propagating through the light guide plate can be optionally controlled.

Examples

The present invention is specifically described below by way of Examples. However, the present invention is not limited to these Examples. Measurement methods for respective characteristics are as described below. In addition, "%" and "part(s)" in Examples are by weight unless otherwise specified.

(1) Refractive Index

Laminates obtained in Examples and Comparative Examples were each cut into a size measuring 100 mm by 100 mm to be used as samples. The samples were each bonded to a surface of a glass plate via a pressure-sensitive adhesive layer. The thickness of the glass plate was 0.7 mm. A central portion (having a diameter of about 20 mm) on the back surface of the glass plate was daubed with a black marker pen. Thus, a sample in which light was not reflected on the back surface of the glass plate was obtained. The sample was set in an ellipsometer (manufactured by J.A. Woollam Japan: VASE), and its refractive index was measured under the conditions of a wavelength of 550 nm and an incident angle of from 50° to 80°.

(2) Reliability Test under High-humidity Environment

Laminates obtained in Examples and Comparative Examples were each cut into a size measuring 100 mm by 100 mm to be used as samples. Next, the samples were each bonded to a surface of a glass plate via a pressure-sensitive adhesive layer. The glass plate had a size measuring 100 mm by 100 mm, and the thickness of the glass plate was 0.7 mm.
Next, the samples each bonded to the glass plate were left to stand still for 6 hours under the conditions of 60°C and 95%RH. After that, the temperature was decreased to the conditions of 30°C and 95%RH at a rate of temperature decrease of 3.75°C/h, and the samples were left to stand still for 8 hours under the conditions of 30°C and 95%RH. After that, the temperature was increased to the conditions of 60°C and 95%RH at a rate of temperature decrease of 15°C/h. This cycle was repeated 10 times. Then, peeling of each of the samples from the glass plate was visually observed. This reliability test was performed twice for each sample, and an evaluation was performed in accordance with the following criteria.

∘: The sample did not peel from the glass plate and waviness of the adhesive was not observed in two rounds of the reliability test (0/2).
×: The sample peeled from the glass plate or waviness of the adhesive was observed in at least one of two rounds of the reliability test (1/2 or 2/2).

[Preparation Example 1] Preparation of Coating Liquid for forming Low-refractive Index Layer

(1) Gelation of Silicon Compound

0.95 g of methyltrimethoxysilane (MTMS) that was a precursor of a silicon compound was dissolved in 2.2 g of dimethyl sulfoxide (DMSO). Thus, a mixed liquid A was prepared. 0.5 g of a 0.01 mol/L aqueous solution of oxalic acid was added to the mixed liquid A, and the mixture was stirred at room temperature (23°C) for 30 minutes so that MTMS was hydrolyzed. Thus, a mixed liquid B containing tris(hydroxy)methylsilane was produced.
0.38 g of 28 wt% ammonia water and 0.2 g of pure water were added to 5.5 g of DMSO, and then the mixed liquid B was further added to the mixture, followed by stirring at room temperature (23°C) for 15 minutes to perform the gelation of tris(hydroxy)methylsilane. Thus, a mixed liquid C containing a gel-like silicon compound was obtained.

(2) Aging Treatment

Aging treatment was performed by incubating the mixed liquid C containing the gel-like silicon compound, which had been prepared as described above, as it was at 40°C for 20 hours.

(3) Pulverization Treatment

Next, the gel-like silicon compound subjected to the aging treatment as described above was crushed into granular shapes each having a size of from several millimeters to several centimeters with a spatula. Next, 40 g of isobutyl alcohol (IBA) was added to the mixed liquid C, and the mixture was lightly stirred. After that, the mixture was left to stand still at room temperature for 6 hours, and the solvent and the catalyst in the gel were separated from the mixture by decantation. The same decantation treatment was performed three times to replace the solvent with IPA. Thus, a mixed liquid D was obtained. Next, the gel-like silicon compound in the mixed liquid D was subjected to pulverization treatment (high-pressure media-less pulverization). The pulverization treatment (high-pressure media-less pulverization) was performed as follows: a homogenizer (manufactured by SMT Co., Ltd., product name: "UH-50") was used, and 1.85 g of the gel-like silicon compound in the mixed liquid D and 1.15 g of IBA were weighed in a 5-cubic centimeter screw bottle, followed by pulverization of the mixture under the conditions of 50 W and 20 kHz for 2 minutes.

The gel-like silicon compound in the mixed liquid D was pulverized by the pulverization treatment, and hence the mixed liquid D was turned into a sol liquid E of the pulverized products. A volume-average particle diameter representing a variation in particle size of the pulverized products in the sol liquid E was determined to be from 0.10 $\mu$m to 0.30 $\mu$m with a dynamic light scattering-type nanotrack particle size analyzer (manufactured by Nikkiso Co., Ltd., UPA-EX150). Further, a methyl ethyl ketone (MEK) solution of a photobase generator (Wako Pure Chemical Industries, Ltd.: product name: WPBG-266) having a concentration of 1.5 wt% and a MEK solution of bis(trimethoxysilyl)hexane having a concentration of 5% were added at ratios of 0.062 g and 0.036 g, respectively, to 0.75 g of the sol liquid E. Thus, a coating liquid for forming a low-refractive index layer was obtained.

[Preparation Example 2] Preparation of Pressure-sensitive Adhesive Layer

92 Parts by weight of butyl acrylate, 5 parts by weight of N-acryloylmorpholine, 2.9 parts by weight of acrylic acid, 0.1 part by weight of 2-hydroxybutyl acrylate, and 0.1 part by weight of 2,2'-azobisisobutyronitrile serving as a polymerization initiator were loaded into a four-necked flask including a stirring blade, a temperature gauge, a nitrogen gas-introducing tube, and a condenser together with 100 parts by weight of ethyl acetate, and a nitrogen gas was introduced to purge the flask with nitrogen while the mixture was gently stirred. After that, while a liquid temperature in the flask was kept at around 55°C, a polymerization reaction was performed for 8 hours to prepare an acrylic polymer solution. 0.2 Part by weight of an isocyanate cross-linking agent (CORONATE L, manufactured by Nippon Polyurethane Industry Co., Ltd., tolylene diisocyanate adduct of trimethylolpropane), 0.3 part by weight of benzoyl peroxide (NYPER BMT, manufactured by Nippon Oil & Fats Co., Ltd.), and 0.2 part by weight of $\gamma$-glycidoxypropylmethoxysilane (manufactured by Shin-Etsu Chemical Co., Ltd.: KBM-403) were blended into 100 parts by weight of the solid content of the resultant acrylic polymer solution to prepare an acrylic pressure-sensitive adhesive solution. Next, the acrylic pressure-sensitive adhesive solution was applied to one surface of a silicone-treated polyethylene terephthalate (PET) film (manufactured by Mitsubishi Chemical Polyester Film Co., Ltd., thickness: 38 $\mu$m) and dried at 150°C for 3 minutes to form a pressure-sensitive adhesive layer having a thickness of 10 $\mu$m. The shear storage elastic modulus G' of the pressure-sensitive adhesive layer at 60°C is shown in Table 1.

[Preparation Example 3] Preparation of Pressure-sensitive Adhesive Layer

A pressure-sensitive adhesive layer was obtained in the same manner as in Preparation Example 2 except that the thickness of the pressure-sensitive adhesive layer was changed to 20 $\mu$m.

[Preparation Example 4] Preparation of Pressure-sensitive Adhesive Layer

A pressure-sensitive adhesive layer was obtained in the same manner as in Preparation Example 2 except that the thickness of the pressure-sensitive adhesive layer was changed to 5 $\mu$m.

[Preparation Example 5] Preparation of Pressure-sensitive Adhesive Layer

100 Parts by weight of butyl acrylate, 5 parts by weight of acrylic acid, 0.1 part by weight of 4-hydroxybutyl acrylate, and 0.1 part by weight of 2,2'-azobisisobutyronitrile serving as a polymerization initiator were loaded into a four-necked flask including a stirring blade, a temperature gauge, a nitrogen gas-introducing tube, and a condenser together with 100 parts by weight of ethyl acetate, and a nitrogen gas was introduced to purge the flask with nitrogen while the mixture was gently stirred. After that, a liquid temperature in the flask was kept at around 55°C, and a polymerization reaction was performed for 8 hours to prepare an acrylic polymer solution. 0.6 Part by weight of an isocyanate cross-linking agent (TAKENATE D-101E, manufactured by Mitsui Chemicals Inc., trimethylolpropane tolylene diisocyanate), 0.2 part by weight of benzoyl peroxide (NYPER BMT, manufactured by Nippon Oil & Fats Co., Ltd.), and 0.2 part by weight of $\gamma$-glycidoxypropylmethoxysilane (manufactured by Shin-Etsu Chemical Co., Ltd.: KBM-403) were blended into 100 parts by weight of the solid content of the resultant acrylic polymer solution to prepare an acrylic pressure-sensitive adhesive composition solution. Next, the acrylic pressure-sensitive adhesive composition solution was applied to one surface of a polyethylene terephthalate film treated with a silicone-based release agent (manufactured by Mitsubishi Chemical Polyester Film Co., Ltd., MRF 38), and was dried at 150°C for 3 minutes to form a pressure-sensitive adhesive layer having a thickness of 15 $\mu$m.

[Preparation Example 6] Preparation of Pressure-sensitive Adhesive Layer

A transparent pressure-sensitive adhesive sheet (LUCIACS (trademark), CS986, manufactured by Nitto Denko Corporation) having a thickness of 25 $\mu$m was prepared as a pressure-sensitive adhesive layer.

[Preparation Example 7] Preparation of Pressure-sensitive Adhesive Layer

A transparent pressure-sensitive adhesive sheet (LUCIACS (trademark), CS986, manufactured by Nitto Denko Corporation) having a thickness of 50 $\mu$m was prepared as a pressure-sensitive adhesive layer.

[Examples 1 to 4 and Comparative Examples 1 and 2]

A coating liquid for forming a low-refractive index layer of Preparation Example 1 was applied onto an acrylic resin substrate (resin substrate, manufactured by Toyo Kohan Co., Ltd.) having a thickness of 30 $\mu$m, and the coating film was then dried. Thus, a low-refractive index layer was formed on the acrylic resin substrate. The refractive index of the low-refractive index layer was 1.19. The thickness of the low-refractive index layer was 1.0 $\mu$m.
Next, the pressure-sensitive adhesive layer obtained in each of Preparation Examples shown in Table 1 was transferred to the surface of the acrylic resin substrate opposite to the low-refractive index layer.
Thus, a laminate having the configuration "low-refractive index layer/resin substrate/pressure-sensitive adhesive layer" was obtained.

Table 1

| | Pressure-sensitive adhesive layer | | | Substrate | | Low-refractive index layer | G'/t (Pa/$\mu$m) | Reliability test result |
|---|---|---|---|---|---|---|---|---|
| | Preparation Example No. | Thickness "t" ($\mu$m) | Shear storage elastic modulus G' at 60°C (Pa) | Kind | Thickness ($\mu$m) | Thickness ($\mu$m) | | |
| Example 1 | Preparation Example No. 2 | 10 | 106,000 | Acrylic resin | 30 | 1 | 10, 600 | 0/2 Peeling ○ |
| Example 2 | Preparation Example No. 3 | 20 | 106,000 | Acrylic resin | 30 | 1 | 5,300 | 0/2 Peeling ○ |
| Example 3 | Preparation Example No. 6 | 25 | 81,100 | Acrylic resin | 30 | 1 | 3,244 | 0/2 Peeling ○ |
| Example 4 | Preparation Example No. 5 | 15 | 94, 199 | Acrylic resin | 30 | 1 | 6,280 | 0/2 Peeling ○ |
| Comparative Example 1 | Preparation Example No. 4 | 5 | 106,000 | Acrylic resin | 30 | 1 | 21,200 | 2/2 Peeling × |
| Comparative Example 2 | Preparation Example No. 7 | 50 | 81,100 | Acrylic resin | 30 | 1 | 1, 622 | 2/2 Waviness of adhesive × |

As apparent from Table 1, it is found that, when the laminate satisfies the expression (1), the laminate has excellent adhesiveness to an object to be bonded under a high-humidity environment and excellent appearance with no waviness of the adhesive observed.

Industrial Applicability

The laminate according to the embodiment of the present invention can be used in various optical products, and in particular, can be suitably used in an optical product including a light guide plate.

Reference Signs List

**1** resin substrate
**2** low-refractive index layer
**3** pressure-sensitive adhesive layer
**100** laminate

**Claims**

1. A laminate, comprising:

   a resin substrate;
   a low-refractive index layer arranged on one side of the resin substrate, the low-refractive index layer having a refractive index of 1.30 or less; and
   a pressure-sensitive adhesive layer arranged on a side of the resin substrate opposite to the low-refractive index layer,
   wherein the laminate satisfies the following expression (1):

   $$2,000 \ [Pa/\mu m] \leq G'/t \leq 15,000 \ [Pa/\mu m] \cdot \cdot (1)$$

   where $G'$ represents a shear storage elastic modulus of the pressure-sensitive adhesive layer at 60°C and "t" represents a thickness of the pressure-sensitive adhesive layer.

2. The laminate according to claim 1, wherein the thickness "t" of the pressure-sensitive adhesive layer is more than 5 $\mu$m and less than 50 $\mu$m.

3. The laminate according to claim 1 or 2, wherein the shear storage elastic modulus $G'$ of the pressure-sensitive adhesive layer at 60°C is 80,000 Pa or more.

FIG. 1

FIG. 2

200

## INTERNATIONAL SEARCH REPORT

| | International application No. |
|---|---|
| | **PCT/JP2024/014909** |

**A. CLASSIFICATION OF SUBJECT MATTER**

*B32B 27/00*(2006.01)i; *B32B 7/022*(2019.01)i; *B32B 7/023*(2019.01)i; *C09J 7/38*(2018.01)i; *C09J 201/00*(2006.01)i; *F21S 2/00*(2016.01)i; *G02B 1/10*(2015.01)i
FI: B32B27/00 M; B32B7/022; B32B7/023; B32B27/00 D; C09J7/38; C09J201/00; F21S2/00 411; G02B1/10

According to International Patent Classification (IPC) or to both national classification and IPC

**B. FIELDS SEARCHED**

Minimum documentation searched (classification system followed by classification symbols)

B32B1/00-43/00; C09J7/00-7/50; C09J1/00-5/10; 9/00-201/10; F21S2/00; G02B1/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2021/193789 A1 (NITTO DENKO CORPORATION) 30 September 2021 (2021-09-30) claim 1, paragraphs [0001], [0013]-[0019], [0093]-[0095], [0105]-[0110], fig. 1 | 1-3 |
| X | JP 2020-64093 A (NITTO DENKO CORPORATION) 23 April 2020 (2020-04-23) claims 1-2, paragraphs [0006], [0009]-[0011], [0016]-[0021], [0027]-[0028], [0089], [0093]-[0095], fig. 1 | 1-3 |
| X | WO 2019/151073 A1 (NITTO DENKO CORPORATION) 08 August 2019 (2019-08-08) claim 1, paragraphs [0006], [0014]-[0015], [0030]-[0035], [0050]-[0051], [0077]-[0079], fig. 1 | 1-3 |
| A | WO 2019/181403 A1 (LINTEC CORPORATION) 26 September 2019 (2019-09-26) entire text, all drawings | 1-3 |
| A | JP 2020-41113 A (NITTO DENKO CORPORATION) 19 March 2020 (2020-03-19) entire text, all drawings | 1-3 |

☐ Further documents are listed in the continuation of Box C.      ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **19 June 2024** | **02 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

| | International application No. |
| --- | --- |
| | **PCT/JP2024/014909** |

| Patent document cited in search report | Publication date (day/month/year) | Patent family member(s) | Publication date (day/month/year) |
| --- | --- | --- | --- |
| WO 2021/193789 A1 | 30 September 2021 | US 2023/0152509 A1<br>claim 1, paragraphs [0001], [0013]-[0026], [0101]-[0104], [0116]-[0127], fig. 1<br>EP 4130561 A1<br>CN 115398292 A<br>KR 10-2022-0159973 A<br>TW 202141094 A | |
| JP 2020-64093 A | 23 April 2020 | (Family: none) | |
| WO 2019/151073 A1 | 08 August 2019 | US 2020/0355866 A1<br>claim 1, paragraphs [0007]-[0013], [0023]-[0026], [0040]-[0045], [0060]-[0062], [0091]-[0093], fig. 1<br>EP 3748221 A1<br>CN 111656087 A<br>KR 10-2020-0118009 A<br>TW 201935113 A | |
| WO 2019/181403 A1 | 26 September 2019 | CN 111868190 A<br>KR 10-2020-0133336 A<br>TW 201945492 A | |
| JP 2020-41113 A | 19 March 2020 | US 2020/0231846 A1<br>entire text, all drawings<br>KR 10-2019-0070997 A<br>TW 201920558 A<br>CN 110249015 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014031726 A1
- WO 2004113966 A1
- JP 2013254183 A
- JP 2012189802 A
- JP 2001188104 A
- WO 2019151073 A1
- JP 2006183022 A
- JP 2015199942 A
- JP 2018053114 A
- JP 2016190996 A
- WO 2018008712 A1